# FASCICULE DE BREVET EUROPEEN

(11) **EP 0 547 980 B1**
(45) Date de publication et mention de la délivrance du brevet: **28.02.1996**
(21) Numéro de dépôt: 92420442.3
(22) Date de dépôt: 01.12.1992
(51) Int. Cl.: H01G 4/18, H01G 4/22

(54) **Procédé de fabrication d'un condensateur à vieillissement rétardé**
Verfahren zur Herstellung eines Kondensators mit verzögerter Alterung
Process of making a capacitor with retarded aging

(30) Priorité: 18.12.1991 FR 9115847
(43) Date de publication de la demande: 23.06.1993
(73) Titulaire: SCHNEIDER ELECTRIC SA, F-92100 Boulogne-Billancourt (FR)
(72) Inventeur: Sebillotte, Alain, F-38050 Grenoble Cédex 9 (FR); Theoleyre, Serge, F-38050 Grenoble Cédex 9 (FR)
(74) Mandataire: Jouvray, Marie-Andrée

(56) Documents cités:
- FR-A- 2 024 636
- US-A- 3 622 848
- CENTRAL PATENTS INDEX, BASIC ABSTRACTS JOURNAL Section Ch, Week 7805, Février 1978 Derwent Publications Ltd., London, GB; Class A, AN 78-09635A

## Description

L'invention est relative à un procédé de fabrication d'un condensateur comprenant un ou plusieurs bobinages ayant deux armatures métalliques séparées par un ou plusieurs films de polypropylène, selon lequel on introduit, lors de la fabrication, des éléments de pré-réticulation du polypropylène comprenant un monomère polyfonctionnel dont les fonctions de la chaîne, une fois activées, réalisent une liaison chimique avec les chaînes macromoléculaires de polypropylène,

Le document JP-A-52153150 décrit un film servant de diélectrique dans un condensateur. Ce film est constitué par du polypropylène réticulé par irradiation en présence d'un monomère polyfonctionnel, notamment de triallylisocyanurate, dont les fonctions de la chaîne réalisent une liaison chimique avec les chaînes macromoléculaires de polypropylène.

Dans les condensateurs de puissance, on utilise principalement le polypropylène comme matériau diélectrique, intercalé entre des armatures métalliques. Les armatures peuvent être constituées par des feuilles d'aluminium bobinées avec le ou les films de polypropylène ou être constituées par un revêtement métallique d'une ou des deux faces du film de polypropylène. Le bobinage constitué par l'enroulement des armatures et du polypropylène est généralement imprégné par un liquide diélectrique, mais l'invention est applicable à des condensateurs secs dans lesquels le bobinage est disposé dans l'air ou dans un gaz à rigidité diélectrique élevée, notamment l'hexafluorure de soufre.

Le bobinage peut également être disposé dans un milieu solide, en particulier dans des graisses.

Il a été constaté que les condensateurs précités présentent un vieillissement en cours d'utilisation qui se traduit par une baisse de la rigidité diélectrique, et par des claquages internes mettant rapidement le condensateur hors service.

La présente invention a pour but de réaliser un procédé de fabrication d'un condensateur dont le vieillissement est retardé.

Le procédé de fabrication selon l'invention est caractérisé en ce que la réticulation du polypropylène est engendrée sous l'action du champ électrique et/ou de la température au cours de l'utilisation du condensateur, de façon à réduire la dégradation de la rigidité diélectrique du film polypropylène.

Le vieillissement du condensateur est essentiellement dû à une dégradation du polypropylène qui engendre une baisse de la rigidité diélectrique. En engendrant selon l'invention une réticulation du polypropylène au cours de l'utilisation du condensateur, on constate une diminution notable du phénomène de vieillissement et des claquages consécutifs à ce vieillissement. La réticulation du prolylopylène vise à créer des liaisons chimiques entre les chaînes macromoléculaires pour obtenir un réseau tridimensionnel qui améliore les propriétés du polypropylène. On incorpore au polyproplylène des monomères polyfonctionnels qui sont des petites chaînes organiques possédant des fonctions chimiques qui une fois activées peuvent réaliser des liaisons chimiques avec les chaînes macromoléculaires du polypropylène. Le mécanisme de réticulation nécessite en plus un apport d'énergie pour créer ces nouvelles liaisons chimiques et selon l'invention, cette énergie est produite par le champ électrique et/ou la température engendrée au cours de l'utilisation du condensateur. L'invention consiste à utiliser un polypropylène non réticulé et de créer les conditions favorables à une réticulation par adjonction de monomères polyfonctionnels. On crée ainsi un polyprolylène pré-réticulé dont la réticulation est enclenchée et par la suite entretenue par un apport d'énergie fourni lors de l'utilisation du condensateur. La rigidité diélectrique du polypropylène est ainsi stabilisée au cours du fonctionnement du condensateur dont la longévité est ainsi notablement améliorée.

Les monomères polyfonctionnels ou agents de liaison utilisés sont des molécules ou composés chimiques qui possèdent une ou plusieurs fonctions chimiques aptes à créer une liaison chimique avec le polypropylène en présence d'une énergie d'activation. Le monomère polyfonctionnel a une ou plusieurs des caractéristiques suivantes:
- il est une macromolécule organique de bas poids moléculaire, à structure oléifinique comportant des doubles liaisons comme le polybutadiène
- il comporte un groupe vynil comme le vynil triméthoxysilane
- il comporte un groupe acrylyl ou un groupe acrylate (acide acrylique) comme le tétraméthylolméthane tétraacrylate, le triméthylolpropane triacrylate, ou le 1.6 hexaneoglycoldiacrylate
- il comporte un groupe isocyanato ou un groupe cyanoto ou un cycle cyanurique ou un cycle cyanurate (acide cyanurique) comme le triallyl isocyanurate ou le triallyl cyanurate
- il comporte un éther avec un groupe allyl comme la glycérine α - Allyl éther
- il comporte une cétone cyclique ou une bicétone (quinone) comme le p-benzoquinone
- il comporte un groupe phénoxy comme le phénol
- il comporte un groupe phénylènedioxy comme l'hydroquinone
- il comporte un cycle époxy comme le diglycidylether du bisphénol A ou le 3-4 époxy cyclo hexyl méthyl- 3-4-époxy cyclohexane carboxylate.

Selon un développement de l'invention, le mécanisme de réticulation est favorisé par l'utilisation d'accélérateurs d'activation qui sont des molécules chimiques faciles à être activées et à former un radical qui transférera son activation dans les zones de liaison. L'accélérateur d'activation est avantageusement choisi parmi les produits suivants:
- le péroxyde de benzoyle
- le péroxyde de di - tert - butyle
- le péroxyde de dicumyle
- le 1,4 - diterbutylperoxy diisopropyl benzène
- le 2,5 - diméthyl - 2,5 - ditertbutyl peroxy hexyne
- le tert-butyl perbenzoate.

Afin de guider toutes ces espèces activées vers un processus de réticulation, il est avantageux d'ajouter un produit antioxydant, notamment des molécules ou composés chimiques ayant des propriétés d'inhibition de la dégradation du polyproplylène. Ces produits ont de plus l'avantage de stabiliser le polymère réticulé et il sont notamment choisis parmi les produits suivants:
- le 2,6 - di - tert - butyl - 4 - méthyl phénol
- le méthylène 3 - (3',5' - di -tert- butyl - 4-hydroxyphényl) - propionate
- l'hydroxybenzophénone.

Le condensateur réalisé selon le procédé précité incorpore des éléments de pré-réticulation et l'opération de réticulation du polyprolylène est déclenchée et entretenue au cours du fonctionnement du condensateur sous l'action du champ électrique et/ou de la température.

Les agents ou éléments de pré-réticulation peuvent être incorporés au condensateur en différents stades de sa fabrication. Lorsque le condensateur comporte un liquide diélectrique d'imprégnation, les éléments de pré-réticulation sont de préférence mélangés à ce liquide diélectrique qui est au contact du polypropylène. Les éléments de pré-réticulation peuvent également être incorporés à tout moment dans la chaîne de transformation du polypropylène depuis son élaboration sous forme de résine de base jusqu'à sa mise en oeuvre pour constituer un élément capacitif de condensateur. On dispose ainsi d'un film de polyproplylène contenant tous les éléments pour la réticulation lors de l'utilisation dans un condensateur, et ce film de polyproplylène peut être utilisé dans tous types de condensateurs, avec ou sans liquide d'imprégnation, à isolation gazeuse ou solide. Il est également possible d'introduire les éléments de pré-réticulation lors du bobinage de l'élément de condensateur, par exemple par saupoudrage ou tout autre moyen opérant, amenant ces éléments de pré-réticulation en contact du polypropylène.

Deux exemples de condensateurs dont le vieillissement a été amélioré par le procédé selon l'invention sont donnés ci-dessous:

### Exemple 1 :

Le condensateur de puissance est constitué par un ensemble d'éléments bobinés qui comprennent deux armatures électriques sous forme de bandes métalliques entre lesquelles est intercalé un isolant diélectrique sous forme de films de polypropylène. Les éléments bobinés sont imprégnés par un liquide diélectrique, notamment par un mélange de mono et de dibenzyltoluène. Pour limiter la dégradation sous champ électrique des films de polypropylène, les éléments pré-réticulants sont introduits dans le condensateur au moment de l'imprégnation. Le liquide d'imprégnation contient les additifs suivants:
- du péroxyde de dicumil, c'est à dire du Bis (α,α- diméthyl benzyle) péroxyde à 2% en poids
- du vynil triméthoxysilane à 4% en poids
- du 2,6 - di - tert - butyl - 4 - méthyl phénol à 1% en poids

### Exemple 2 :

Le condensateur de puissance est constitué par un ensemble d'éléments bobinés qui comprennent deux films de polypropylène métallisés enroulés alternativement. Pour limiter la dégradation sous champ électrique des films de polyproplylène, on incorpore au matériau, au moment de l'élaboration du film de polypropylène, de façon homogène les additifs suivants:
- du benzoyl peroxyde à 2% en poids
- du 1,4 benzoquinone à 1% en poids.

L'invention est bien entendu nullement limitée au procédé plus particulièrement décrit, et elle s'applique à des condensateurs basse tension ou moyenne et haute tension.

## Revendications

1. Procédé de fabrication d'un condensateur comprenant un ou plusieurs bobinages ayant deux armatures métalliques séparées par un ou plusieurs films de polypropylène, selon lequel on introduit, lors de la fabrication, des éléments de pré-réticulation du polypropylène comprenant un monomère polyfonctionnel dont les fonctions de la chaîne, une fois activées, réalisent une liaison chimique avec les chaînes macromoléculaires de polypropylène, procédé caractérisé en ce que la réticulation du polypropylène est engendrée sous l'action du champ électrique et/ou de la température au cours de l'utilisation du condensateur, de façon à réduire la dégradation de la rigidité diélectrique du film polypropylène.

2. Procédé de fabrication selon la revendication 1, caractérisé en ce qu'on ajoute au monomère polyfonctionnel un accélérateur d'activation facile à activer et à former un radical.

3. Procédé de fabrication selon la revendication 1 ou 2, caractérisé en ce qu'on ajoute un agent stabilisant pour orienter la réaction vers un processus de réticulation.

4. Procédé de fabrication selon la revendication 1, caractérisé en ce que le monomère polyfonctionnel a une ou plusieurs des caractéristiques suivantes:
- il est une macromolécule organique de bas poids moléculaire, à structure oléifinique comportant des doubles liaisons
- il comporte un groupe vynil (CH2 CH-)
- il comporte un groupe acrylyl (CH2CHCO-) ou un groupe acrylate (CH2CHCOO-)
- il comporte un groupe isocyanato (OCN-) ou un groupe cyanoto (NCO-)ou ou un cycle cyanurique (C3N3) ou un cycle cyanurate (acide cyanurique) (C3N3O3)
- il comporte un éther avec un groupe allyl (CH2CHCH2O-)
- il comporte une cétone cyclique (OC6Hx-) ou une bicétone (O2C6Hx-)
- il comporte un groupe phénoxy (C6HxO-)
- il comporte un groupe phénylènedioxy (-OC6HxO-)
- il comporte un cycle époxy

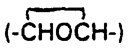

5. Procédé de fabrication selon l'une quelconque des revendications précédentes, caractérisé en ce que les éléments de pré-réticulation sont mélangés au liquide diélectrique d'imprégnation du bobinage.

6. Procédé de fabrication selon l'une des revendications 1 à 5, caractérisé en ce que les éléments de pré-réticulation sont incorporés au film de polypropylène lors de sa fabrication.

7. Procédé de fabrication selon l'une des revendications 1 à 5, caractérisé en ce que les éléments de pré-réticulation sont déposés sur le film de polypropylène au cours de l'opération de bobinage.

## Patentansprüche

1. Verfahren zur Herstellung eines Kondensators mit einem oder mehreren Wickeln aus zwei, durch eine oder mehrere Polypropylenfolien gegeneinander isolierten Metallbelägen, bei dem während der Herstellung Mittel zur Vorvernetzung des Polypropylens eingebracht werden, die ein polyfunktionelles Monomer umfassen, dessen Kettengruppen nach ihrer Aktivierung eine chemischen Bindung mit den Makromolekülketten des Polypropylens eingehen, dadurch gekennzeichnet, daß die Vernetzung des Polypropylens durch die Wirkung des elektrischen Feldes und/oder die Temperatur während des Gebrauchs des Kondensators in Gang gesetzt wird, so daß die Verschlechterung der Durchschlagfestigkeit des Polypropylenfolie gemindert wird.

2. Herstellungsverfahren nach Anspruch 1, dadurch gekennzeichnet, daß dem polyfunktionellen Monomer ein Aktivierungsbeschleuniger beigegeben wird, der eine leichte Aktivierbarkeit und Radikalbildung aufweist.

3. Herstellungsverfahren nach Anspruch 1 oder 2, dadurch gekennzeichnet, daß ein Stabilisierungsmittel zugesetzt wird, um die Reaktion in einen Vernetzungsvorgang überzuleiten.

4. Herstellungsverfahren nach Anspruch 1, dadurch gekennzeichnet, daß das polyfunktionelle Monomer eine oder mehrere der nachstehend aufgeführten Eigenschaften aufweist:
- es handelt sich um ein organisches Makromolekül mit niedrigem Molekulargewicht und einer Olefinstruktur mit Doppelbindungen,
- es enthält eine Vinylgruppe (CH2 CH-),
- es enthält eine Akrylyl- (CH2CHCO-) oder Akrylat-Gruppe (CH2CHCOO-),
- es enthält eine Isozyanat- (OCN-) bzw. Zyanot-Gruppe (NCO-) oder einen Zyanur-(C3N3) bzw. Zyanuratring (C3N3O3),
- es enthält ein Äther mit einer Allylgruppe (CH2CHCH2O-),
- es enthält einen Ketonring (OC6Hx-) oder ein Biketon (O2C6Hx-),
- es enthält eine Phenoxygruppe (C6HxO-),
- es enthält eine Phenylendioxygruppe (-OC6HxO-),
- es enthält einen Epoxyring

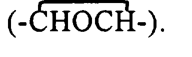

5. Herstellungsverfahren nach irgendeinem der vorhergehenden Ansprüche, dadurch gekennzeichnet, daß die Vorvernetzungskomponenten dem Flüssigdielektrikum beigemischt werden, mit dem der Wickel getränkt wird.

6. Herstellungsverfahren nach einem der Ansprüche 1 bis 5, dadurch gekennzeichnet, daß die Vorvernetzungskomponenten während der Herstellung der Polypropylenfolie in diese eingebracht werden.

7. Herstellungsverfahren nach einem der Ansprüche 1 bis 5, dadurch gekennzeichnet, daß die Vorvernetzungskomponenten während des Wickelvorgangs auf die Polypropylenfolie aufgebracht werden.

## Claims

1. A manufacturing process of a capacitor comprising one or more windings having two metal armatures separated by one or more polypropylene films, according to which, in the manufacturing stage, pre-cross-linking elements of the polypropylene are introduced comprising a polyfunctional monomer having chain functions which, once they have been activated, make a chemical bond with the macromolecular polypropylene chains, a process characterized in that cross-linking of the polypropylene is generated by the action of the electrical field and/or temperature in the course of use of the capacitor, so as to reduce the degradation of the dielectric strength of the polypropylene film.

2. The manufacturing process according to claim 1, characterized in that an activation accelerator which can easily be activated and can easily form a radical is added to the polyfunctional monomer.

3. The manufacturing process according to claim 1 or 2, characterized in that a stabilising agent is added to direct the reaction towards a cross-linking process.

4. The manufacturing process according to claim 1, characterized in that the polyfunctional monomer has one or more of the following characteristics :
- it is an organic macromolecule of low molecular weight, with an olefinic structure comprising double bonds,
- it comprises a vinyl group (CH2CH-),
- it comprises an acrylyl group (CH2CHCO-) or an acrylate group (CH2CHCOO-),
- it comprises an isocyanato group (OCN-) or a cyanato group (NCO-) or a cyanuric cycle (C3N3) or a cyanurate cycle (cyanuric acid) (C3N3O3),
- it comprises an ether with an allyl group (CH2CHCH2O-),
- it comprises a cyclic ketone (OC6Hx-) or a biketone (O2C6Hx-),
- it comprises a phenoxy group (C6HxO-),
- it comprises a phenylenedioxy group (-OC6HxO-),
- it comprises an epoxy cycle

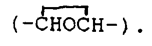

5. The manufacturing process according to any one of the above claims, characterized in that the pre-cross-linking elements are mixed with a dielectric liquid for impregnation of the winding.

6. The manufacturing process according to one of the claims 1 to 5, characterized in that the pre-cross-linking elements are incorporated in the polypropylene film when the latter is manufactured.

7. The manufacturing process according to one of the claims 1 to 5, characterized in that the pre-cross-linking elements are deposited on the polypropylene film in the course of the winding operation.
